# EUROPÄISCHE PATENTSCHRIFT

(11) **EP 4 301 655 B1**
(45) Veröffentlichungstag und Bekanntmachung des Hinweises auf die Patenterteilung: **01.04.2026**
(21) Anmeldenummer: 22710536.8
(22) Anmeldetag: 25.02.2022
(51) Int. Cl.: B63G 8/24, B63G 8/22, B01J 7/00

(54) **NOTANBLASESYSTEM FÜR EIN UNTERSEEBOOT**
EMERGENCY BLOW SYSTEM FOR A SUBMARINE
SYSTÈME DE CHASSE DE SECOURS POUR SOUS-MARIN

(30) Priorität: 05.03.2021 DE 102021202158
(43) Veröffentlichungstag der Anmeldung: 10.01.2024
(73) Patentinhaber: TKMS GmbH, 24143 Kiel (DE); thyssenkrupp AG, 45143 Essen (DE)
(72) Erfinder: NODORP, Andreas, 24589 Dätgen (DE); HAMMERSCHMIDT, Andreas, 24116 Kiel (DE); SPRECKELMEYER, Jan, 24229 Dänischenhagen (DE); NAGORNY, Boris, 22949 Ammersbek (DE)
(74) Vertreter: thyssenkrupp Intellectual Property GmbH
(86) Internationale Anmeldenummer: PCT/EP2022/054805
(87) Internationale Veröffentlichungsnummer: WO 2022/184583

(56) Entgegenhaltungen:
- EP-A2- 2 439 395
- FR-A- 1 594 886
- RU-C1- 2 134 212
- US-A1- 2016 236 761

## Beschreibung

Die Erfindung betrifft eine Vorrichtung und ein Verfahren zu Anblasen im Notfall an Bord eines Unterseebootes.

Im Notfall ist es notwendig, ein Unterseeboot so schnell wie möglich wieder an die Wasseroberfläche zu bringen, um die Besatzung zu retten. Hierzu werden die Tauchzellen so schnell wie möglich mit Luft gefüllt, um das Wasser aus diesen zu verdrängen und so schnell und so viel wie möglich an Auftrieb zu erzeugen.

Für den normalen Betrieb wird Druckluft verwendet, um beispielsweise die Tauchtiefe im Regelbetrieb anzupassen.

Muss aber schnell Auftrieb erzeugt werden, ist die reine Verwendung von Druckluft aus mehreren Gründen nachteilig. Zum einen ist ein entsprechendes Anblasen umso wichtiger, je tiefer das Unterseeboot ist, da es umso dringender wird, ein weiteres Absinken zu verhindern, was auch zu einer Zerstörung des Druckkörpers führen könnte, wenn dieser unter die Zerstörungstiefe gelangt. Zum anderen ist es so, dass je tiefer das Unterseeboot ist, umso höher ist jedoch auch der Außendruck, was wiederum dazu führt, dass das von der gleichen Stoffmenge an Druckluft eingenommene Volumen geringer ist. Somit ist auch der erzeugte Auftrieb geringer.

Erschwerend kommt noch hinzu, dass beim Ausströmen eines Gases, wie beispielsweise Druckluft, von einem hohen Druck, beispielsweise 400 bar, in einer normalen Druckluftflasche, welches gegen einen geringeren Umgebungsdruck ausströmt, der eine Größenordnung oder mehr geringer ist, es zu einer raschen Abkühlung des ausströmenden Gases kommt. Diese Abkühlung reduziert das erzeugte Volumen und somit die Menge des vertriebenen Wassers. In der Konsequenz wird daher der erzeugte Auftrieb zusätzlich vermindert.

Daher sind aus dem Stand der Technik Lösungen bekannt.

Aus der EP 1 415 906 A1 ist eine Vorrichtung zur Auftriebserzeugung für Unterwasserfahrzeuge in Form einer Gaserzeugungsvorrichtung bekannt.

Aus der EP 2 628 675 A1 ist ein Verfahren zum Anblasen einer Tauchzelle eines Unterseebootes bekannt, bei der das Druckgas in der Tauchzelle erwärmt wird.

Aus der DE 10 2012 202 544 A1 ist ein Verfahren zum Anblasen einer Tauchzelle eines Unterseebootes und eine Anblasvorrichtung für ein Unterseeboot bekannt.

Aus der DE 10 2010 047 677 A1 ist eine Vorrichtung zum Bedrücken eines Auftriebstanks bekannt.

Aus der EP 2 439 395 A2 ist eine Vorrichtung zum Bedrücken eines Auftriebstanks bekannt.

Aus der US 2016/23676 A1 ist ein selektiv tauchfähiges Objekt bekannt.

Aus der RU 2 134 212 C1 ist ein System zum Notauftauchen von Tauchfahrzeugen, eine Vorrichtung zum Anblasen der Hauptballasttanks während des Notauftauchens und ein Verfahren zum Notauftauchen bekannt.

Aus der FR 1 594 886 A betrifft eine tauchfähige Vorrichtung, die es ermöglicht einen flüssigen Monokraftstoff in Gas umzuwandeln.

Die Lösungen aus dem Stand der Technik haben sich als aufwändig (zusätzliches Gewicht und Volumen) oder weniger effektiv erwiesen.

Aufgabe der Erfindung ist es, eine Vorrichtung bereitzustellen, die kompakt in das Unterseeboot integrierbar ist und im Notfall auch in großer Tiefe schnell einen großen Auftrieb erzeugen kann.

Gelöst wird diese Aufgabe durch das Notanblasesystem mit den in Anspruch 1 angegebenen Merkmalen sowie durch das Verfahren mit den in Anspruch 12 angegebenen Merkmalen. Vorteilhafte Weiterbildungen ergeben sich aus den Unteransprüchen, der nachfolgenden Beschreibung sowie den Zeichnungen.

Das erfindungsgemäße Notanblasesystem für ein Unterseeboot dient dazu, in einem Notfall schnell Auftrieb zu erzeugen und das Unterseeboot an die Wasseroberfläche zu bringen. Das Notanblasesystem weist wenigstens einen ersten Druckluftspeicher, eine Brennstoffzuführung, eine Brennkammer und eine Mischkammer auf. Selbstverständlich kann das Notanblasesystem auch eine Mehrzahl an Druckluftspeichern aufweisen. Beispielsweise und bevorzugt kann es sich auch um die Druckluftspeicher handeln, die für den normalen Betrieb des Unterseebootes verwendet werden, um den Auftrieb langsam und kontrolliert anzupassen. Der erste Druckluftspeicher ist mit der Mischkammer gasführend verbunden. Die Druckluft wird also somit aus dem ersten Druckluftspeicher durch die Mischkammer in die erste Tauchzelle geleitet. Die Brennstoffzuführung ist zur Zuführung von Brennstoff zur Brennkammer ausgebildet. Beispielsweise und bevorzugt handelt es sich um einen flüssigen Brennstoff. Die Brennkammer und die Mischkammer sind miteinander verbunden. Hierbei können die Brennkammer und die Mischkammer direkt miteinander verbunden sein, alternativ können diese aber auch über ein Ventil oder eine Berstscheibe verschließbar miteinander verbunden sein. Die in der Brennkammer erzeugten heißen Gase werden somit in die Mischkammer geführt und dort mit der Druckluft aus dem ersten Druckluftspeicher vermischt und dadurch abgekühlt in die erste Tauchzelle geleitet. Die Mischkammer ist mit wenigstens einer ersten Tauchzelle verbunden.

Vorteil der erfindungsgemäßen Vorrichtung ist, dass zunächst in der Brennkammer eine sehr heiße Verbrennung erfolgen kann und die dort entstehenden heißen Abgase dann in der Mischkammer mit der kalten Druckluft aus dem ersten Druckluftspeicher vermischt und mit einer hohen, aber für die Stahlstruktur der ersten Tauchzelle unproblematischen Temperatur in die erste Tauchzelle geleitet werden. Gleichzeitig wird durch diese moderate Temperatur ein zu schneller Abkühlungseffekt und damit ein schneller Verlust an Auftrieb vermieden. Hierdurch ist das System klein, robust und gut in die bestehenden Systeme eines Unterseebootes integrierbar. Der Druckluftspeicher ist gasführend, beispielsweise mittels einer Druckluftleitung, mit der Mischkammer verbunden. Dieses ermöglicht den Vorteil, dass die Druckluft aus dem Speicher direkt in die Mischkammer eingeblasen wird. Es muss nicht erst Druckluft in die erste Tauchzelle eingeblasen werden, um diese anschließend für eine Erwärmung wieder zu entnehmen oder anschließend in der ersten Tauchzelle zu erhitzen. Vielmehr wird dem Gas bei der Expansion, welche eine Abkühlung bewirkt, direkt die Wärme zugeführt. Gleichzeitig führt dieses auch zu einer sehr homogenen Temperaturverteilung des durch die Mischkammer in die erste Tauchzelle eingeführten Gases, sodass alle Bereiche im Inneren der ersten Tauchzelle erwärmt werden.

Beispielsweise und insbesondere kann die Mischkammer mit mehreren Rohrverbindungen, beispielsweise zwei bis zehn, bevorzugt vier bis acht, Rohrverbindungen mit der ersten Tauchzelle verbunden sein. Hierdurch kann das Gas optimal in die erste Tauchzelle eingeleitet werden, insbesondere auch, wenn die erste Tauchzelle konstruktionsbedingt eine unregelmäßige Form aufweist.

In einer anderen Ausführungsform kann die Mischkammer sich ganz oder teilweise in der ersten Tauchzelle befinden oder mit der ersten Tauchzelle direkt und unmittelbar verbunden sein. In einer Weiterbildung dieser Ausführungsform befindet sich die Mischkammer ganz oder teilweise in der ersten Tauchzelle, wobei die Druckluftzuführung vom Druckluftspeicher mittels einer Druckluftleistung ausschließlich in die Mischkammer erfolgt. Es besteht vorzugsweise keine Luft- oder Gaszuführung aus der Tauchzelle in die Mischkammer oder aus dem Druckluftspeicher in die erste Tauchzelle an der Mischkammer vorbei.

In einer weiteren Ausführungsform der Erfindung ist zwischen der Brennkammer und der Mischkammer ein erstes Trennelement, bevorzugt eine Berstscheibe, zum wasserdichten Abtrennen der Brennkammer von der Mischkammer angeordnet. In dieser Ausführungsform kann das umgebende Wasser durch die erste Tauchzelle bis in die Mischkammer eindringen. Lediglich die Brennkammer ist dadurch dauerhaft vor Anlagerungen oder Korrosion durch Seewasser geschützt, wodurch die Funktionalität gewährleistet bleibt. Diese Ausführungsform ist besonders bevorzugt, wenn die Mischkammer mit mehreren Rohrverbindungen mit der ersten Tauchzelle verbunden ist. Die Berstscheibe dient zur wasserdichten Versiegelung der Brennkammer und wird vorzugsweise durch den Druck, die Hitze oder die Kombination aus beidem irreversibel geöffnet, wenn das Notanblasesystem verwendet wird. Vorteil der Berstscheibe ist, dass diese im Notfall keinen anfälligen Öffnungsmechanismus aufweist.

Die Berstscheibe kann in ihrem Durchmesser größer als die Verbindungsöffnung der Verbindung von Brennkammer und Mischkammer sein und sie kann dabei an ihrem Umfang eine Sollbruchstelle oder Sollbruchlinie aufweisen an der die Berstscheibe zerbricht. Die Sollbruchstelle oder Sollbruchlinie kann dabei so angeordnet sein, dass sie mechanisch in Richtung der Brennkammer gestützt wird, so dass eine in Richtung der Brennkammer weisende Kraft wesentlich höher sein muss, um Berstscheibe zum Versagen zu führen, als eine in Richtung der Mischkammer weisende Kraft.

In einer weiteren alternativen Ausführungsform der Erfindung ist zwischen der Brennkammer und der Mischkammer ein erstes Trennelement, bevorzugt ein Absperrventil, zum wasserdichten Abtrennen der Brennkammer von der Mischkammer angeordnet. In dieser Ausführungsform kann das umgebende Wasser durch die erste Tauchzelle bis in die Mischkammer eindringen. Lediglich die Brennkammer ist dadurch dauerhaft vor Anlagerungen oder Korrosion durch Seewasser geschützt, wodurch die Funktionalität gewährleistet bleibt. Diese Ausführungsform ist besonders bevorzugt, wenn die Mischkammer mit mehreren Rohrverbindungen mit der ersten Tauchzelle verbunden ist und somit ein Absperrventil vor der Mischkammer schlecht zu realisieren ist. Vorteil des ersten Absperrventils gegenüber der Berstscheibe ist die Wiederverwendbarkeit ohne nach der Verwendung hier umfangreiche Arbeiten zu deren Ersetzung vornehmen zu müssen.

In einer weiteren Ausführungsform der Erfindung sind die Brennkammer und die Mischkammer unmittelbar aneinander angrenzend angeordnet. Hierdurch ist kein Abkühlen des heißen Brenngases möglich, die gesamte thermische Energie kann so genutzt werden.

**In** einer weiteren Ausführungsform der Erfindung ist die Mischkammer für die aus der Brennkammer austretenden Gastemperaturen ausgelegt. Dieses kann beispielsweise durch eine geeignete Materialauswahl oder eine Beschichtung der Mischkammer erreicht werden. Eine geeignete Beschichtung kann beispielsweise eine keramische Beschichtung oder eine Hartmetallbeschichtung sein. Durch die geeignete Auslegung muss eben nur die Mischkammer für die hohen Temperaturen geeignet sein und nicht die gesamte erste Tauchzelle.

**In** einer weiteren Ausführungsform der Erfindung ist die erste Tauchzelle für die aus der Mischkammer austretenden Gastemperaturen ausgelegt. Dieses kann beispielsweise durch eine geeignete Materialauswahl oder eine Beschichtung der ersten Tauchzelle erreicht werden. Eine geeignete Beschichtung kann beispielsweise eine keramische Beschichtung oder eine Hartmetallbeschichtung sein.

**In** einer weiteren Ausführungsform der Erfindung ist die Brennkammer außerhalb der ersten Tauchzelle angeordnet. Hierdurch ist das Eindringen von Wasser in die Brennkammer weniger wahrscheinlich oder kann ganz vermeiden werden.

**In** einer weiteren Ausführungsform der Erfindung weist die Brennkammer eine Sauerstoffeinspeisung für einen sauerstoffhaltigen Gasstrom auf. Bevorzugt ist der Sauerstoffanteil des sauerstoffhaltigen Gasstroms dabei höher als in der Umgebungsluft. Besonders bevorzugt ist die Brennkammer auf einen sauerstoffhaltigen Gasstrom mit einem Sauerstoffanteil von 30 Vol.-% bis 75 Vol.-%, bevorzugt von 32 Vol.-% bis 50 Vol.-%, ausgelegt. Hierdurch entstehen höhere Verbrennungstemperaturen, auf die die Brennkammer ausgelegt sein muss. Selbstverständlich kann auch reiner Sauerstoff verwendet werden, der an Bord eines Unterseeboots oft beispielsweise in Form von flüssigem Sauerstoff mitgeführt wird.

Der sauerstoffhaltige Gasstrom kann dabei aus wenigstens einem gesonderten Sauerstoffbehälter, in denen eine Gasmischung mit den richtigen Volumenverhältnissen gespeichert ist, in die Brennkammer über Leitungen gespeist werden. Bevorzugt wird in dieser Ausführungsform ein Medium verwendet, das an Bord bereits Anwendung findet, wie zum Beispiel Atemgasgemische aus Sauerstoff und Sticksoff, wie diese von Tauchern verwendet werden. Der sauerstoffhaltige Gasstrom kann alternativ auch aus einer Mischung aus Druckluft und Sauerstoff aus den bestehenden Lagereinrichtungen vor der Einspeisung in die Brennkammer erzeugt werden. In dieser Ausführungsform wird der Druckluft und der Sauerstofftank über Leitungen und geeignete Ventile an eine Mischkammer angeschlossen und die Mischkammer mit der Zuführung zur Brennkammer verbunden. Letzteres ist insofern vorteilhaft, als dass für die Brennstoffverbrennung kein zusätzliches Medium mitgeführt werden muss.

In einer weiteren Ausführungsform der Erfindung wird wenigstens ein Teil der Druckluft in die Brennkammer, bevorzugt koaxial zum Treibstoff in die Brennkammer eingeleitet. Hierdurch kann auf eine zusätzliche Sauerstoffversorgung verzichtet werden. Auf der anderen Seite ist der Sauerstoffgehalt auf den Sauerstoffgehalt der Druckluft begrenzt.

In einer weiteren Ausführungsform der Erfindung ist die Brennkammer von einer Vorwärmkammer umgeben, besonders bevorzugt radial um die Gasstromrichtung der Brennkammer. Der erste Druckluftspeicher ist mit der Vorwärmkammer verbunden und die Vorwärmkammer ist mit der Mischkammer verbunden, sodass die Druckluft aus dem ersten Druckluftspeicher zunächst in die Vorwärmkammer und danach in die Mischkammer geführt wird. Die Vorwärmkammer und die Brennkammer sind dabei vorzugsweise durch eine gemeinsame Wand getrennt. Die Trennwand ist vorzugsweise und mindestens teilweise aus gut wärmeleitendem Material, beispielsweise aus Kupfer. Hierdurch wird in der Brennkammer entstehende Wärme durch die Trennwand geleitet und an die Druckluft abgegeben, sodass zum einen die Wand der Brennkammer gekühlt und zum anderen die Druckluft vorgewärmt wird. Beides führt dazu, dass die Größe der Mischkammer zu Erzielung einer Vermischung und Temperaturvergleichmäßigung kleiner ausfallen kann. Gleichzeitig wird die Kühlung der Wand der Brennkammer erreicht, ohne, dass diese Energie verloren gehen würde, was die Materialbelastung senkt. Es kann vorgesehen sein, dass die Trennwand im Bereich der Vorwärmkammer Strukturen zur besseren Wärmeübertragung an die Druckluft aufweist, beispielsweise Lamellen. Bevorzugt wird die Druckluft durch die Vorwärmkammer koaxial zum Abgasstrom der Brennkammer in die Mischkammer geführt.

In einer weiteren Ausführungsform der Erfindung weist die Brennkammer eine Hauptbrennkammer und eine Zündkammer auf. Die Zündkammer weist wenigstens eine erste Zündvorrichtung auf und die Brennstoffzuführung ist zur Zuführung von Brennstoff zur Zündkammer ausgebildet ist. Zwar könnte die Zündvorrichtung auch direkt in der Hauptbrennkammer angeordnet sein, es hat sich jedoch als zuverlässiger herausgestellt, zunächst in einer kleineren Zündkammer eine Zündung zu erreichen und anschließend die große Energiefreisetzung in der Hauptbrennkammer hiervon getrennt durchzuführen.

In einer weiteren Ausführungsform der Erfindung weist die Brennkammer eine erste Zündvorrichtung und eine zweite Zündvorrichtung auf. Zur Erhöhung der Ausfallsicherheit sind die erste Zündvorrichtung und die zweite Zündvorrichtung voneinander verschieden. Beispielsweise ist die erste Zündvorrichtung eine elektrische Plasmazündkerze und die zweite Zündvorrichtung eine elektrisch beheizte keramische Glühkerze, wie diese beispielsweise in Dieselmotoren eingesetzt wird.

In einer weiteren Ausführungsform der Erfindung weist das Notanblasesystem einen ersten Treibstoffspeicher auf. Der erste Treibstoffspeicher weist einen Treibstofftankdruckgasspeicher auf. Weiter weist der erste Treibstoffspeicher einen Treibstofflagerbereich auf. Innerhalb des Treibstofflagerbereichs sind ein erster Bereich zur Lagerung eines flüssigen Treibstoffs und ein zweiter Bereich für Gas, bevorzugt für ein Inertgas, insbesondere Stickstoff, aus dem Treibstofftankdruckgasspeicher angeordnet. Der erste Bereich und der zweite Bereich sind volumenveränderlich voneinander getrennt. Beispielsweise und bevorzugt ist der erste Bereich innerhalb eines Faltbalgs oder einer Blase, eines flexiblen Körpers zur Aufnahme des Treibstoffs angeordnet. Alternativ könnten der erste Bereich und der zweite Bereich in einem Zylinder durch einen Kolben getrennt angeordnet sein. Wird das Gas in den zweiten Bereich gefördert, wird die Trennwand zwischen dem ersten Bereich und dem zweiten Bereich bewegt und so der Treibstoff aus dem Treibstoffspeicher gedrückt. Hierdurch kann beispielsweise auf eine Treibstoffpumpe verzichtet werden. Ein solches System arbeitet sehr einfach und auch im Notfall beim Ausfall anderer Schiffssysteme zuverlässig.

In einer weiteren Ausführungsform der Erfindung ist die innere Oberfläche der Mischkammer mit einer thermischen Schutzschicht beschichtet. Dieses ist besonders bevorzugt, wenn die Brennkammer unterstöichometrisch bezogen auf Sauerstoff betrieben wird. Dann verbrennt restlicher Treibstoff mit der Druckluft in der Mischkammer, was die Durchmischung verbessert. Durch den wesentlich höheren Inertgasanteil (Stickstoff und Abgase aus der Verbrennung) werden hierbei deutlich geringere Temperaturen im Vergleich zur Verbrennung in der Brennkammer erzielt. Es ist dennoch vorteilhaft, die Oberfläche zu schützen. Des Weiteren ist zu berücksichtigen, dass es durch eingedrungenes Meerwasser in der Mischkammer zur Anhaftung von biologischem Material gekommen sein kann. Dieses wird bei den Temperaturen in der Mischkammer verbrennen oder pyrolysieren.

In einer weiteren Ausführungsform der Erfindung weist die Brennstoffzuführung ein erstes Zuführungsventil, ein zweites Zuführungsventil und ein drittes Zuführungsventil auf. Das erste Zuführungsventil ist ein Absperrventil, das zweite Zuführungsventil ist ein Druckregelventil und das dritte Zuführungsventil ist ein Masseflussventil. Eine rein mechanische Lösung ist zu bevorzugen, da das Anblasen auch funktionieren sollte, wenn die meisten anderen Schiffssysteme bereits ausgefallen sind. Daher ist ein Verzicht auf eine elektronische Regelung vorteilhaft, da diese auch ohne Stromversorgung funktionsfähig bleibt.

In einem weiteren Aspekt betrifft die Erfindung ein Verfahren zum Betreiben eines erfindungsgemäßen Notanblasesystem. In der Brennkammer wird Treibstoff verbrannt und die heißen Abgase der Brennkammer werden in der Mischkammer mit der Druckluft aus dem ersten Druckluftspeicher vermischt. Vorteil dieses zweistufigen Systems ist, dass in einem Notfall Treibstoff zur Erhitzung zugegeben werden kann, aber nicht nur Treibstoff zur Erzeugung des Auftriebs verwendet wird, sondern auch auf die Druckluftspeicher zurückgegriffen wird. Hierdurch kann in optimaler Weise schnell und durch eine sehr kompakte Vorrichtung ein möglichst großer Auftrieb erzeugt werden.

Anschließend wird das in der Mischkammer erzeugte Gasgemisch in die erste Tauchzelle eingeleitet.

In einer weiteren Ausführungsform der Erfindung wird in einem ersten Schritt ausschließlich Druckluft aus dem ersten Druckluftspeicher durch die Mischkammer in die erste Tauchzelle geleitet und erst in einem zweiten Schritt wird Treibstoff in der Brennkammer verbrannt. Hierdurch wird vorteilhafter Weise zunächst eine kalte Luftblase in der ersten Tauchzelle erzeugt, insbesondere, wenn die erste Tauchzelle zuvor vollständig geflutet war. Erst dann wird die Druckluft stark erwärmt in die erste Tauchzelle geleitet, wodurch die heißen Gase nicht sofort mit dem kalten Wasser in Kontakt kommen und schnell wieder abgekühlt werden. Zwar kühlt sich das Gas dennoch ab, aber durch den erzeugten Auftrieb steigt das Unterseeboot auch nach oben, wodurch der Umgebungsdruck sinkt.

In einer weiteren Ausführungsform der Erfindung wird das Verhältnis aus Treibstoff zu Druckluft so eingestellt, dass die Mischluft beim Verlassen der Mischkammer eine Temperatur von 300 °C bis 600 °C, vorzugsweise von 400 °C bis 500 °C aufweist. Dieses stellt ein Optimum zwischen möglichst hoher Temperatur zur Erzeugung eines möglichst großen Gasvolumens (bei praktisch konstantem Außendruck zu Beginn) und der Vermeidung einer zu starken thermischen Belastung der ersten Tauchzelle sowie zur Vermeidung einer zu schnellen und starken Abkühlung des Gases in der ersten Tauchzelle dar.

In einer weiteren Ausführungsform der Erfindung wird als Treibstoff ein synthetischer flüssiger Treibstoff verwendet. Zwar kann beispielsweise auch Diesel verwendet werden. Die meisten synthetischen Treibstoffe haben jedoch den Vorteil, dass die Zündtemperatur auch bei langer Lagerung konstant bleibt. Selbst bei der Verwendung des Diesels aus dem Antrieb ist zu berücksichtigen, dass der Diesel in den Verbindungsleitungen von den Schiffstanks zum Notanblasesystem lange lagern und sich daher verändern kann. Beispielsweise kann als synthetischer Treibstoff Dicyclopentadien (Tricyclo[5.2.1.0^{2,6}]deca-3,8-dien) verwendet werden.

In einer weiteren Ausführungsform der Erfindung wird der sauerstoffhaltige Gasstrom so gewählt, dass dieser einen Sauerstoffanteil von 30 Vol.-% bis 75 Vol.-%, bevorzugt von 32 Vol.-% bis 50 Vol.-% aufweist. Hierdurch können optimale Verbrennungsbedingungen erzielt werden und gleichzeitig extreme Temperaturspitzen vermieden werden.

In einer weiteren Ausführungsform der Erfindung wird das Mischungsverhältnis zwischen Druckluft und Abgas aus der Brennkammer in einem Verhältnis von 5:1 bis 20:1, bevorzugt von 7:1 bis 12:1 gewählt. Durch dieses Mischungsverhältnis kann insbesondere eine optimale Zieltemperatur in der ersten Tauchzelle erreicht werden.

In einer weiteren Ausführungsform der Erfindung das Notanblasesystem für ein Unterseeboot wenigstens einen ersten Druckluftspeicher, eine erste Brennstoffzuführung und eine zweite Brennstoffzuführung, eine erste Brennkammer und eine zweite Brennkammer sowie eine erste Mischkammer und eine zweite Mischkammer auf. Die erste Brennstoffzuführung ist zur Zuführung von Brennstoff zur ersten Brennkammer ausgebildet und die zweite Brennstoffzuführung ist zur Zuführung von Brennstoff zur zweiten Brennkammer ausgebildet. Die erste Brennkammer und die erste Mischkammer sind miteinander verbunden und die zweite Brennkammer und die zweite Mischkammer sind miteinander verbunden. Die erste Mischkammer und die zweite Mischkammer sind mit wenigstens einer ersten Tauchzelle verbunden. Hierdurch ist ein noch schnelleres Verdrängen von Wasser aus der ersten Tauchzelle möglich. Außerdem wird hierdurch die Redundanz erhöht und somit die Sicherheit des Unterseeboots insgesamt. In einer Fortbildung dieser Ausführungsform weist das Notanblasesystem auch einen ersten Treibstoffspeicher und einen zweiten Treibstoffspeicher auf, wobei der erste Treibstoffspeicher mit der ersten Brennstoffzuführung verbunden ist und wobei der zweite Treibstoffspeicher mit der zweiten Brennstoffzuführung verbunden ist.

In einer weiteren Ausführungsform der Erfindung weist das Notanblasesystem einen ersten Drucksensor auf, wobei der erste Drucksensor zur Bestimmung des Außendrucks und somit zur Bestimmung der Tauchtiefe ausgebildet ist. Der erste Drucksensor ist derart mit der Steuerung der anderen Komponenten verbunden, dass eine Auslösung erst bei einer Tauchtiefe mehr als 100 m, bevorzugt von mehr als 200 m, möglich ist.

Besonders bevorzugt ist eine manuelle Auslösung über rein mechanische Mittel des Notanblasesystems möglich. Beispielsweise wird das Notanblasesystem durch das Öffnen des Startventils im Treibstoffspeicher ausgelöst. Weiter bevorzugt verfügt das Notanblasesystem nicht über Mittel, um das Anblasen vorzeitig zu beenden, sondern das Anblasen erfolgt, bis der Treibstoff aus dem Treibstoffspeicher verbraucht ist. Hierdurch sind Fehler auf Grund eines Abschaltesystems eliminiert.

In einer weiteren Ausführungsform der Erfindung wird die Verbindung zwischen dem Druckluftspeicher und der Brenneinheit durch den Druckkörper des Unterseeboots geführt. Bevorzugt weist diese Verbindung im Inneren wenigstens ein erstes Ventil auf, durch Öffnen dieses Ventils das Notanblasesystem aktiviert wird. Hierdurch ist ein manueller Zugriff durch die Mannschaft im Inneren des Unterseeboots leicht möglich. Zusätzlich zu dem Ventil kann auch eine elektrische Startvorrichtung im Inneren des Druckkörpers vorgesehen sein, die eine elektrische Auslösung des Notanblasesystems ermöglicht.

Nachfolgend ist das erfindungsgemäße Notanblasesystem anhand eines in den Zeichnungen dargestellten Ausführungsbeispiels näher erläutert.
- Fig. 1: Unterseeboot mit Notanblasesystem
- Fig. 2: Brenneinheit
- Fig. 3: Treibstoffspeicher

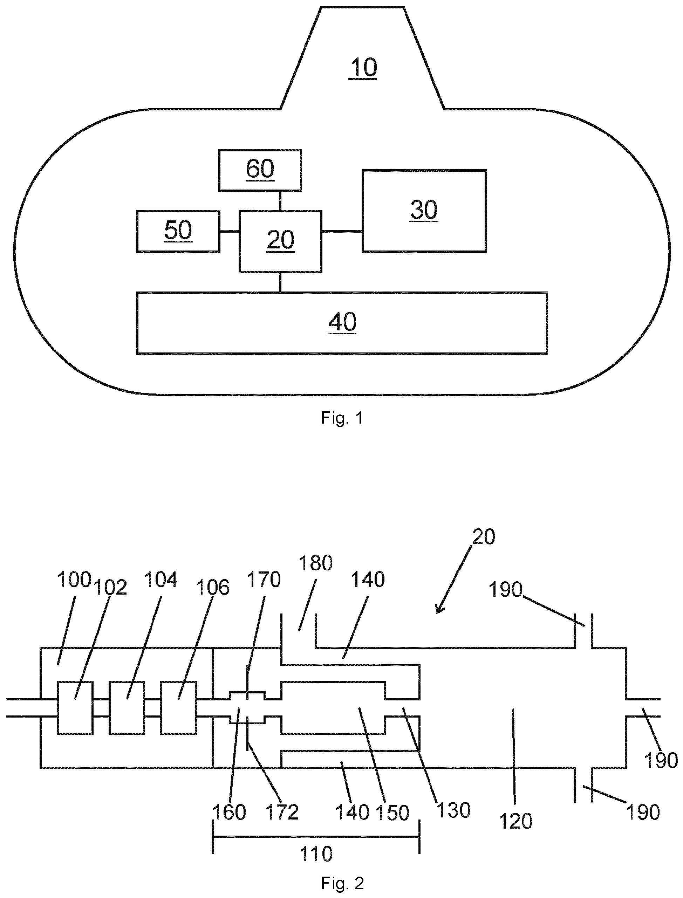

In Fig. 1 ist ein Unterseeboot 10 mit einem Notanblasesystem stark vereinfacht schematisch dargestellt. In der gezeigten Form hätte das Unterseeboot 10 nur eine Tauchzelle 40, realistisch hat es jedoch wenigstens eine auf der Steuerbordseite und eine auf der Backbordseite. In diesem Fall hätte das Unterseeboot 10 bevorzugt zwei Notanblasesysteme, eines auf der Steuerbordseite und eines auf der Backbordseite. Ebenso sind weitere Kombinationen denkbar, beispielsweise zwei Tauchzellen im Bugbereich und eine Tauchzelle im Heckbereich. Sind die Tauchzellen 40 so angeordnet, dass diese beispielsweise jeweils einen bugseitigen und einen heckseitigen Bereich je Seite des Unterseebootes 10 aufweisen, können auch vier Notanblasesysteme vorteilhaft sein. Mehrere Notanblasesysteme können aber beispielsweise und bevorzugt einen gemeinsamen Druckluftspeicher 30 aufweisen, wobei dieser aus mehreren Teilspeichern, beispielsweise handelsüblichen Druckluftflaschen, bestehen kann. Bevorzugt weist jedes Notanblasesystem jedoch einen eigenen Druckluftspeicher 30 auf.

Das Notanblasesystem weist als zentrale Komponente eine Brenneinheit 20 auf. Die Brenneinheit 20 ist auf der einen Seite mit dem Druckluftspeicher 30 und auf der anderen Seite mit der Tauchzelle 40 verbunden. Weiter ist die Brenneinheit mit einem Treibstoffspeicher 50 verbunden. Im gezeigten Beispiel ist die Brenneinheit weiter mit einem Sauerstoffspeicher 60 verbunden, der im gezeigten Beispiel eine Mischung aus 40 Vol.-% Sauerstoff und 60 Vol.-% Stickstoff enthält. Alternativ kann auch entweder der Druckluftspeicher 30 als Sauerstoffquelle oder auch die Umgebungsluft verwendet werden.

In Fig. 2 ist die Brenneinheit 20 stark schematisiert im Querschnitt gezeigt. Im Groben besteht die Brenneinheit aus drei Teilen, der Brennstoffzuführung 100, der Brennkammer 110 und der Mischkammer 120. Der Treibstoff wird durch die Brennstoffzuführung 100 eingeleitet und über drei Ventile, das erste Zuführungsventil 102, ein Absperrventil, das zweite Zuführungsventil 104, ein Druckregelventil, und das dritte Zuführungsventil 106, ein Masseflussventil, geregelt. Hierdurch wird vorzugsweise rein mechanisch der Treibstoffzufluss zur Brennkammer 110 zugeführt. Die Brennkammer 110 besteht im gezeigten Beispiel aus der Hauptbrennkammer 150 und einer vorgelagerten kleineren Zündkammer 160. In der Zündkammer 160 ist eine erste Zündvorrichtung 170 und eine zweite Zündvorrichtung 172 angeordnet, die technologisch unterschiedliche Zündtechniken verwenden. Beispielsweise ist die erste Zündvorrichtung 170 eine elektrische Plasmazündkerze und die zweite Zündvorrichtung 172 eine elektrisch beheizte keramische Glühkerze. In der Brennkammer 110 wird der Treibstoff mit einem sauerstoffhaltigen Gas vermischt, bevorzugt darin vernebelt, gezündet und verbrannt. Als sauerstoffhaltiges Gas wird beispielsweise ein Gas mit 40 Vol.-% Sauerstoff verwendet, als Treibstoff Dicyclopentadien. Hierdurch ergibt sich eine Brenntemperatur von etwa 2700 °C. Um die Hauptbrennkammer 150 ist eine Vorwärmkammer 140 angeordnet.

Zwischen der Hauptbrennkammer 150 und der Vorwärmkammer 140 befindet sich eine starre, wärmeleitende Trennwand, beispielsweise aus gut wärmeleitendem Kupfer, welche Wärme leitet und somit die Temperatur der mittels Druckluftzufuhr 180 in die Vorwärmkammer 140 zugeführten Druckluft erhöhen kann. Über einen Durchgangsbereich 130 gelangen die Gase der Verbrennung von der Brennkammer 110 in die Mischkammer 120. Beispielsweise und vorteilhafter Weise ist im Durchgangsbereich 130 ein Trennelement, beispielsweise eine Berstscheibe oder ein Ventil, angeordnet, welches eine Absperrung gegen das aus der Tauchzelle 40 eindringende Seewasser vornehmen kann. In der Mischkammer 120 werden Druckluft aus dem Vorwärmbereich 140 und Verbrennungsgase aus der Brennkammer 110 in einem Verhältnis von 5:1 bis 10:1 (Stoffmengenverhältnis oder Normvolumenverhältnis, also Volumenverhältnis bei Normdruck und -temperatur) vermengt. Hierdurch wird eine Temperatur des Gemisches am Ende der Mischkammer 120 von etwa 400 °C bis 450 °C erreicht. Dieses Gasgemisch wird über im gezeigten Fall drei Verbindungen 190 zur Tauchzelle 40 geführt. Mehrere Verbindungen 190 sind vorteilhaft, um bei der typischer Weise unregelmäßigen Form der Tauchzelle 40 ein optimales Anblasen zu erreichen, insbesondere um von oben das Gasgemisch einzuführen und so auch Schwankungen in der oberen Form der Tauchzelle 40 auszugleichen.

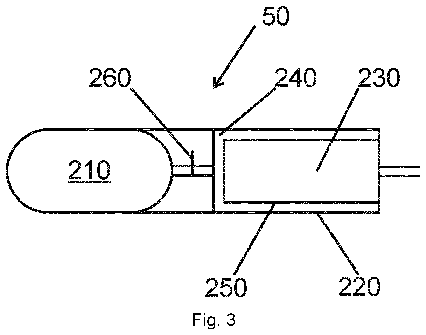

Um im Notfall den Treibstoff sicher zur Verfügung zu stellen, weist das gezeigte Notanblasesystem einen Treibstoffspeicher 50 auf, der in Fig. 3 stark schematisiert im Querschnitt gezeigt ist. Der Treibstoffspeicher 50 weist in einem ersten Bereich 230 des Treibstofflagerbereichs 220 einen Vorrat an Treibstoff, beispielsweise an Dicyclopentadien, auf. Dieser Treibstoff kann mittels Druckgas in die Brenneinheit 20 überführt werden. Als Druckgas wird bevorzugt Stickstoff eingesetzt. Dazu weist der Treibstoffspeicher 50 einen Treibstofftankdruckgasspeicher 210 auf, der über ein Ventil 260 mit dem zweiten Bereich 240 des Treibstofflagerbereichs 220 verbunden ist. Der erste Bereich 230 und der zweite Bereich 240 sind über eine bewegliche flexible Trennwand 250 voneinander getrennt. Beispielsweise ist die flexible Trennwand 250 in Form eines Balgs ausgeführt. Wird die Druckluft aus dem Treibstofftankdruckgasspeicher 210 in den zweiten Bereich 240 geführt, so wird hierdurch der Treibstoff aus dem ersten Bereich 230 heraus und in die Brennstoffzuführung der Brenneinheit 20 gedrückt. Die flexible Trennwand sorgt dafür, dass der Brennstoff kontinuierlich nachgeführt werden kann.

### Bezugszeichen

- 10: Unterseeboot
- 20: Brenneinheit
- 30: Druckluftspeicher
- 40: Tauchzelle
- 50: Treibstoffspeicher
- 60: Sauerstoffspeicher
- 100: Brennstoffzuführung
- 102: erstes Zuführungsventil
- 104: zweites Zuführungsventil
- 106: drittes Zuführungsventil
- 110: Brennkammer
- 120: Mischkammer
- 130: Durchgangsbereich
- 140: Vorwärmkammer
- 150: Hauptbrennkammer
- 160: Zündkammer
- 170: erste Zündvorrichtung
- 172: zweite Zündvorrichtung
- 180: Druckluftzufuhr
- 190: Verbindung zur Tauchzelle
- 210: Treibstofftankdruckgasspeicher
- 220: Treibstofflagerbereich
- 230: erster Bereich
- 240: zweiter Bereich
- 250: flexible Trennwand
- 260: Startventil

## Patentansprüche

1. Notanblasesystem für ein Unterseeboot (10), wobei das Notanblasesystem wenigstens einen ersten Druckluftspeicher (30), eine Brennstoffzuführung (100), eine Brennkammer (110) und eine Mischkammer (120) aufweist, wobei die Brennstoffzuführung (100) zur Zuführung von Brennstoff zur Brennkammer (110) ausgebildet ist, wobei der erste Druckluftspeicher (30 ) mit der Mischkammer (120) gasführend verbunden ist, wobei die Brennkammer (110) und die Mischkammer (120) miteinander verbunden sind, wobei die Mischkammer (120) mit wenigstens einer ersten Tauchzelle (40) verbunden ist.

2. Notanblasesystem nach Anspruch 1, **dadurch gekennzeichnet, dass** zwischen der Brennkammer (110) und der Mischkammer (120) ein erstes Trennelement zum wasserdichten Abtrennen der Brennkammer (110) von der Mischkammer (120) angeordnet ist.

3. Notanblasesystem nach einem der vorstehenden Ansprüche, **dadurch gekennzeichnet, dass** die Brennkammer (110) und die Mischkammer (120) unmittelbar aneinander angrenzend angeordnet sind.

4. Notanblasesystem nach einem der vorstehenden Ansprüche, **dadurch gekennzeichnet, dass** die Mischkammer (120) für die aus der Brennkammer (110) austretenden Gastemperaturen ausgelegt ist.

5. Notanblasesystem nach einem der vorstehenden Ansprüche, **dadurch gekennzeichnet, dass** die erste Tauchzelle (40) für die aus der Mischkammer (120) austretenden Gastemperaturen ausgelegt ist.

6. Notanblasesystem nach einem der vorstehenden Ansprüche, **dadurch gekennzeichnet, dass** die Brennkammer (110) außerhalb der ersten Tauchzelle (40) angeordnet ist.

7. Notanblasesystem nach einem der vorstehenden Ansprüche, **dadurch gekennzeichnet, dass** die Brennkammer (110) von einer Vorwärmkammer (140) umgeben ist, wobei der erste Druckluftspeicher (30) mit der Vorwärmkammer (140) verbunden ist, wobei die Vorwärmkammer (140) mit der Mischkammer (120) verbunden ist, sodass die Druckluft aus dem ersten Druckluftspeicher (30) zunächst in die Vorwärmkammer (140) und danach in die Mischkammer (120) geführt wird.

8. Notanblasesystem nach einem der vorstehenden Ansprüche, **dadurch gekennzeichnet, dass** die Brennkammer (110) eine Hauptbrennkammer (150) und eine Zündkammer (160) aufweist, wobei die Zündkammer (160) wenigstens eine erste Zündvorrichtung (170) aufweist, die Brennstoffzuführung (100) zur Zuführung von Brennstoff zur Zündkammer (160) ausgebildet ist.

9. Notanblasesystem nach einem der vorstehenden Ansprüche, **dadurch gekennzeichnet, dass** das Notanblasesystem einen ersten Treibstoffspeicher (50) aufweist, wobei der erste Treibstoffspeicher (50) einen Treibstofftankdruckgasspeicher (210) aufweist, wobei der erste Treibstoffspeicher (50) einen Treibstofflagerbereich (220) aufweist, wobei innerhalb des Treibstofflagerbereichs (220) eine erster Bereich (230) zur Lagerung eines flüssigen Treibstoffs und ein zweiter Bereich (240) für Gas aus dem Treibstofftankdruckgasspeicher (210) angeordnet sind, wobei der erste Bereich und der zweite Bereich volumenveränderlich voneinander getrennt sind.

10. Notanblasesystem nach einem der vorstehenden Ansprüche, **dadurch gekennzeichnet, dass** die innere Oberfläche der Mischkammer (120) mit einer thermischen Schutzschicht beschichtet ist.

11. Notanblasesystem nach einem der vorstehenden Ansprüche, **dadurch gekennzeichnet, dass** die Brennstoffzuführung (100) ein erstes Zuführungsventil (102), ein zweites Zuführungsventil (104) und ein drittes Zuführungsventil (106) aufweist, wobei das erste Zuführungsventil (102) ein Absperrventil ist, wobei das zweite Zuführungsventil (104) ein Druckregelventil ist und wobei das dritte Zuführungsventil (106) ein Masseflussventil ist.

12. Verfahren zum Betreiben eines Notanblasesystem nach einem der vorstehenden Ansprüche, **dadurch gekennzeichnet, dass** Treibstoff in der Brennkammer (110) verbrannt wird und die heißen Abgase der Brennkammer (110) in der Mischkammer (120) mit der Druckluft aus dem ersten Druckluftspeicher (30) vermischt werden und anschließend das in der Mischkammer (120) erzeugte Gasgemisch in die erste Tauchzelle (40) eingeleitet wird.

13. Verfahren nach Anspruch 12, **dadurch gekennzeichnet, dass** in einem ersten Schritt ausschließlich Druckluft aus dem ersten Druckluftspeicher (30) durch die Mischkammer (120) in die erste Tauchzelle (40) geleitet wird und erst in einem zweiten Schritt Treibstoff in der Brennkammer (110) verbrannt wird.

14. Verfahren nach einem der Ansprüche 12 bis 13, **dadurch gekennzeichnet, dass** das Verhältnis aus Treibstoff zu Druckluft so eingestellt wird, dass die Mischluft beim Verlassen der Mischkammer (120) eine Temperatur von 300 °C bis 600 °C, vorzugsweise von 400 °C bis 500 °C aufweist.

15. Verfahren nach einem der Ansprüche 12 bis 14, **dadurch gekennzeichnet, dass** der sauerstoffhaltige Gasstrom mit einem Sauerstoffanteil von 30 Vol.-% bis 75 Vol.-%, bevorzugt von 35 Vol.-% bis 50 Vol.-% ausgewählt wird.

16. Verfahren nach einem der Ansprüche 12 bis 15, **dadurch gekennzeichnet, dass** das Mischungsverhältnis zwischen Druckluft und Abgas aus der Brennkammer (110) in einem Verhältnis von 5:1 bis 20:1, bevorzugt von 7:1 bis 12:1 gewählt wird.

## Claims

1. Emergency blow-out system for a submarine (10), wherein the emergency blow-out system comprises at least a first compressed air reservoir (30), a fuel supply (100), a combustion chamber (110) and a mixing chamber (120), wherein the fuel supply (100) is designed to supply fuel to the combustion chamber (110), wherein the first compressed air reservoir (30) is connected to the mixing chamber (120) in a gas-conducting manner, wherein the combustion chamber (110) and the mixing chamber (120) are connected to each other, wherein the mixing chamber (120) is connected to at least one first immersion cell (40).

2. Emergency blow-off system according to claim 1, **characterised in that** a first separating element for watertight separation of the combustion chamber (110) from the mixing chamber (120) is arranged between the combustion chamber (110) and the mixing chamber (120).

3. Emergency blow-off system according to one of the preceding claims, **characterised in that** the combustion chamber (110) and the mixing chamber (120) are arranged directly adjacent to each other.

4. Emergency blow-off system according to one of the preceding claims, **characterised in that** the mixing chamber (120) is designed for the gas temperatures emerging from the combustion chamber (110).

5. Emergency blow-off system according to one of the preceding claims, **characterised in that** the first immersion cell (40) is designed for the gas temperatures emerging from the mixing chamber (120).

6. Emergency blow-off system according to one of the preceding claims, **characterised in that** the combustion chamber (110) is arranged outside the first immersion cell (40).

7. Emergency blow-off system according to one of the preceding claims, **characterised in that** the combustion chamber (110) is surrounded by a preheating chamber (140), wherein the first compressed air reservoir (30) is connected to the preheating chamber ( ), wherein the preheating chamber (140) is connected to the mixing chamber (120), so that the compressed air from the first compressed air reservoir (30) is first fed into the preheating chamber (140) and then into the mixing chamber (120).

8. Emergency blow-off system according to one of the preceding claims, **characterised in that** the combustion chamber (110) has a main combustion chamber (150) and an ignition chamber (160), wherein the ignition chamber (160) comprising at least one first ignition device (170), the fuel supply (100) being designed to supply fuel to the ignition chamber (160).

9. Emergency blow-off system according to one of the preceding claims, **characterised in that** the emergency blow-off system comprises a first fuel storage unit (50), wherein the first fuel storage unit (50) comprises a fuel tank pressurised gas storage unit (210), wherein the first fuel storage unit (50) comprises a fuel storage area (220), wherein a first area (230) for storing a liquid fuel and a second area (240) for gas from the fuel tank pressurised gas storage (210) are arranged within the fuel storage area (220), wherein the first area and the second area are separated from each other in a volume-variable manner.

10. Emergency blow-off system according to one of the preceding claims, **characterised in that** the inner surface of the mixing chamber (120) is coated with a thermal protective layer.

11. Emergency blow-off system according to one of the preceding claims, **characterised in that** the fuel supply (100) **has** a first supply valve (102), a second supply valve (104) and a third supply valve (106), wherein the first supply valve (102) is a shut-off valve, wherein the second supply valve (104) is a pressure control valve and wherein the third supply valve (106) is a mass flow valve.

12. Method for operating an emergency blow-off system according to one of the preceding claims, **characterised in that** fuel is burned in the combustion chamber (110) and the hot exhaust gases from the combustion chamber (110) are mixed in the mixing chamber (120) with the compressed air from the first compressed air reservoir (30) and the gas mixture produced in the mixing chamber (120) is then fed into the first immersion cell (40).

13. Method according to claim 12, **characterised in that** in a first step, only compressed air from the first compressed air storage tank (30) is fed through the mixing chamber (120) into the first immersion cell (40) and only in a second step is fuel burned in the combustion chamber (110).

14. Method according to one of claims 12 to 13, **characterised in that** the ratio of fuel to compressed air is adjusted so that the mixed air has a temperature of 300 °C to 600 °C, preferably 400 °C to 500 °C, when it leaves the mixing chamber (120).

15. Method according to one of claims 12 to 14, **characterised in that** the oxygencontaining gas stream is selected with an oxygen content of 30 vol.% to 75 vol.%, preferably 35 vol.% to 50 vol.%.

16. Method according to one of claims 12 to 15, **characterised in that** the mixing ratio between compressed air and exhaust gas from the combustion chamber (110) is selected in a ratio of 5:1 to 20:1, preferably from 7:1 to 12:1.

## Revendications

1. Système de soufflage d'urgence pour un sous-marin (10), dans lequel le système de soufflage d'urgence comprend au moins un premier réservoir d'air comprimé (30), une alimentation en carburant (100), une chambre de combustion (110) et une chambre de mélange (120), dans lequel l'alimentation en carburant (100) est conçue pour fournir du carburant à la chambre de combustion (110), le premier réservoir d'air comprimé (30) étant relié à la chambre de mélange (120) de manière à permettre le passage du gaz, la chambre de combustion (110) et la chambre de mélange (120) étant reliées entre elles, la chambre de mélange (120) étant reliée à au moins une première cellule d'immersion (40).

2. Système de purge d'urgence selon la revendication 1, **caractérisé en ce qu'**un premier élément de séparation pour la séparation étanche de la chambre de combustion (110) de la chambre de mélange (120) est disposé entre la chambre de combustion (110) et la chambre de mélange (120).

3. Système de purge d'urgence selon l'une des revendications précédentes, **caractérisé en ce que** la chambre de combustion (110) et la chambre de mélange (120) sont disposées directement l'une à côté de l'autre.

4. Système de purge d'urgence selon l'une des revendications précédentes, **caractérisé en ce que** la chambre de mélange (120) est conçue pour les températures de gaz sortant de la chambre de combustion (110).

5. Système de purge d'urgence selon l'une des revendications précédentes, **caractérisé en ce que** la première cellule d'immersion (40) est conçue pour les températures de gaz sortant de la chambre de mélange (120).

6. Système de purge d'urgence selon l'une des revendications précédentes, **caractérisé en ce que** la chambre de combustion (110) est disposée à l'extérieur de la première cellule d'immersion (40).

7. Système de purge d'urgence selon l'une des revendications précédentes, **caractérisé en ce que** la chambre de combustion (110) est entourée d'une chambre de préchauffage (140), dans laquelle le premier réservoir d'air comprimé (30) est relié de maniè e à la chambre de préchauffage ( ), dans laquelle la chambre de préchauffage (140) est reliée à la chambre de mélange (120), de sorte que l'air comprimé provenant du premier réservoir d'air comprimé (30) est d'abord introduit dans la chambre de préchauffage (140), puis dans la chambre de mélange (120).

8. Système de purge d'urgence selon l'une des revendications précédentes, **caractérisé en ce que** la chambre de combustion (110) comprend une chambre de combustion principale (150) et une chambre d'allumage (160), dans lequel la chambre d'allumage (160) comprend au moins un premier dispositif d'allumage (170), l'alimentation en combustible (100) étant conçue pour alimenter en combustible la chambre d'allumage (160).

9. Système de purge d'urgence selon l'une des revendications précédentes, **caractérisé en ce que** le système de purge d'urgence comprend une première unité de stockage de carburant (50), dans laquelle la première unité de stockage de carburant (50) comprend une unité de stockage de gaz sous pression (210) du réservoir de carburant, dans laquelle la première unité de stockage de carburant (50) comprend une zone de stockage de carburant (220), dans laquelle une première zone (230) pour stocker un carburant liquide et une deuxième zone (240) pour le gaz provenant du réservoir de carburant à stockage de gaz sous pression (210) sont disposées à l'intérieur de la zone de stockage de carburant (220), la première zone et la deuxième zone étant séparées l'une de l'autre de manière à permettre une variation de volume.

10. Système de purge d'urgence selon l'une des revendications précédentes, **caractérisé en ce que** la surface intérieure de la chambre de mélange (120) est recouverte d'une couche de protection thermique.

11. Système de purge d'urgence selon l'une des revendications précédentes, **caractérisé en ce que** l'alimentation en carburant (100) **comporte** une première vanne d'alimentation (102), une deuxième soupape d'alimentation (104) et une troisième soupape d'alimentation (106), la première soupape d'alimentation (102) étant une soupape d'arrêt, la deuxième soupape d'alimentation (104) étant une soupape de régulation de pression et la troisième soupape d'alimentation (106) étant une soupape de débit massique.

12. Procédé pour faire fonctionner un système de purge d'urgence selon l'une des revendications précédentes, **caractérisé en ce qu'** e de carburant est brûlé dans la chambre de combustion (110) et les gaz d'échappement chauds provenant de la chambre de combustion (110) sont mélangés dans la chambre de mélange (120) avec l'air comprimé provenant du premier réservoir d'air comprimé (30) et le mélange gazeux produit dans la chambre de mélange (120) est ensuite introduit dans la première cellule d'immersion (40).

13. Procédé selon la revendication 12, **caractérisé en ce que** , dans une première étape, seul l'air comprimé provenant du premier réservoir de stockage d'air comprimé (30) est acheminé à travers la chambre de mélange (120) dans la première cellule d'immersion (40) et ce n'est que dans une deuxième étape que le combustible est brûlé dans la chambre de combustion (110).

14. Procédé selon l'une des revendications 12 à 13, **caractérisé en ce que** le rapport entre le combustible et l'air comprimé est ajusté de telle sorte que l'air mélangé ait une température comprise entre 300 °C et 600 °C, de préférence entre 400 °C et 500 °C, lorsqu'il quitte la chambre de mélange (120).

15. Procédé selon l'une des revendications 12 à 14, **caractérisé en ce que** le flux de gaz contenant de l'oxygène est sélectionné avec une teneur en oxygène de 30 % en volume à 75 % en volume, de préférence de 35 % en volume à 50 % en volume.

16. Procédé selon l'une des revendications 12 à 15, **caractérisé en ce que** le rapport de mélange entre l'air comprimé et les gaz d'échappement provenant de la chambre de combustion (110) est choisi dans un rapport de 5:1 à 20:1, de préférence de 7:1 à 12:1.
